# EUROPÄISCHE PATENTSCHRIFT

(11) **EP 0 891 818 B1**
(45) Veröffentlichungstag und Bekanntmachung des Hinweises auf die Patenterteilung: **15.06.2005**
(21) Anmeldenummer: 98105877.9
(22) Anmeldetag: 31.03.1998
(51) Int. Cl.: B05B 7/14, B05B 12/08, G01F 1/64

(54) **Pulverbeschichtungsanlage mit vertikal übereinander angeordneten Sprühpistolen**
Powder coating installation with vertically aligned spray guns
Installation de revêtement par poudrage avec pistolets pulvérisateurs alignés verticalement

(30) Priorität: 24.04.1997 DE 19717353
(43) Veröffentlichungstag der Anmeldung: 20.01.1999
(73) Patentinhaber: WAGNER INTERNATIONAL AG, 9450 Altstätten (CH)
(72) Erfinder: Giesinger, Hans, 9000 St. Gallen (CH); Keller, Wolfgang, 88639 Wald-Ruhestetten (DE); Untersee, Beat H., 9450 Altstätten (CH); Adams, Horst, Dr., 9016 St. Gallen (CH)
(74) Vertreter: Liesegang, Roland, Dr.-Ing.

(56) Entgegenhaltungen:
- EP-A- 0 717 269
- WO-A-97/02895
- DE-A- 19 524 327
- US-A- 4 714 890
- PATENT ABSTRACTS OF JAPAN vol. 007, no. 270 (P-240), 2. Dezember 1983 (1983-12-02) & JP 58 151517 A (SUMITOMO KINZOKU KOGYO KK), 8. September 1983 (1983-09-08)
- PATENT ABSTRACTS OF JAPAN vol. 015, no. 338 (P-1243), 27. August 1991 (1991-08-27) & JP 03 125924 A (BABCOCK HITACHI KK), 29. Mai 1991 (1991-05-29)
- PATENT ABSTRACTS OF JAPAN vol. 016, no. 330 (P-1388), 17. Juli 1992 (1992-07-17) & JP 04 098305 A (FUEROO KOUGIYOU KK), 31. März 1992 (1992-03-31)

## Beschreibung

Die Erfindung betrifft eine Pulverbeschichtungsanlage gemäß dem Oberbegriff des Patentanspruchs 1 (DE 195 24 327 A).

In den bekannten Pulverbeschichtungsanlagen laufen die zu beschichtenden Werkstücke in horizontaler Richtung in einer Beschichtungskabine an Pulverbeschichtungspistolen vorbei, welche auf- und abbewegt werden, um das gesamte Werkstück mit Pulver zu beaufschlagen, wobei in der Regel mehrere Pistolen in Durchlaufrichtung hintereinander (horizontal) angeordnet sind. Die Konfigurationen mit mehreren hintereinander angeordneten Pistolen hat historisch folgende Gründe:
- Bisher war der Wirkungsgrad bei der Pulverbeschichtung nicht so gut, daß es genügt hätte, eine einzige Pistole auf und ab zu bewegen, um das Werkstück zu beschichten. Nur mit mehreren hintereinander angeordneten Pistolen konnte eine ausreichende Schichtdicke erzeugt werden.
- Die pro Zeiteinheit von einer einzelnen Pulverbeschichtungspistole ausgestoßene Pulvermenge war nicht ausreichend konstant, so daß erst durch das Zusammenwirken mehrerer hintereinander angeordneter Beschichtungspistolen eine zufriedenstellende Homogenität der Pulverbeschichtung erzielbar war.

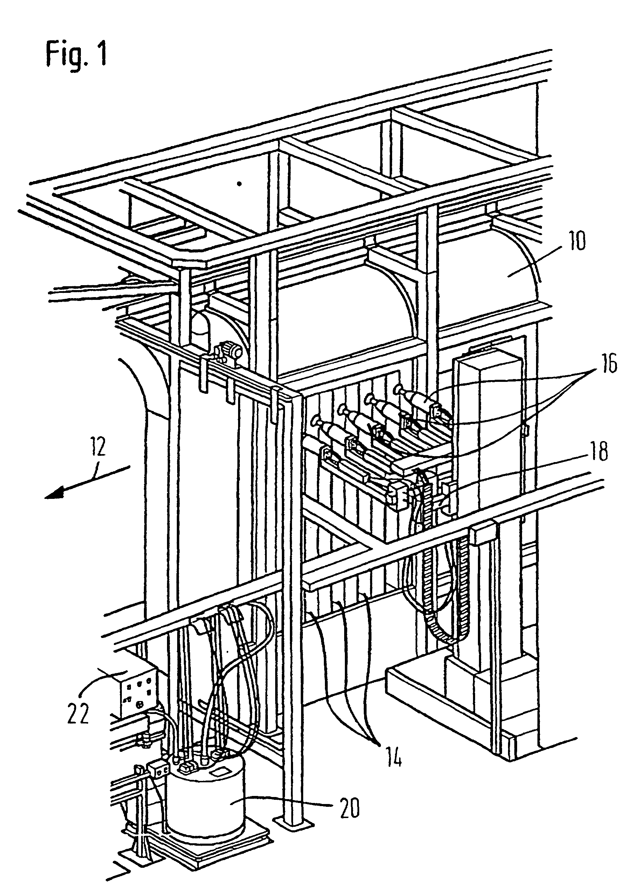

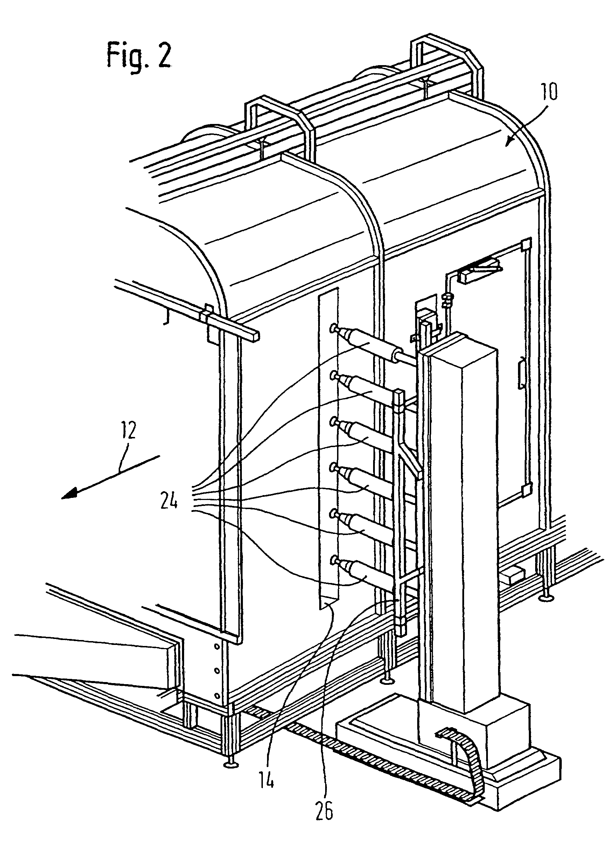

Mittlerweile ist die Pulverbeschichtungstechnik im Bezug auf die beiden oben genannten Punkte stark weiter entwickelt worden, und es werden heute auch Beschichtungsanlagen gebaut, bei denen die Pistolen vertikal übereinander angeordnet sind, so daß bei dem in horizontaler Richtung vorbeilaufenden Werkstück jeweils nur eine Pistole für die Beschichtung eines bestimmten horizontalen Streifens des Werkstücks "verantwortlich" ist. Der Vorteil dieser Konfiguration ist, daß die Beschichtungskabine wesentlich kürzer gebaut werden kann, was für den Fachmann ohne weiteres verständlich ist. Vergleiche dazu auch die Fig. 1 und 2, welche später noch auführlich erläutert werden.

Allerdings ergibt sich bei der Anordnung mit vertikal übereinander liegenden Beschichtungspistolen ein neues Problem. Wenn bei dieser vertikalen Anordnung die von einer Beschichtungspistole ausgebrachte Pulvermenge schwankt, oder eine Beschichtungspistole gar ganz ausfällt (z.B. wegen einer Verstopfung im Pulverschlauch oder in der Pulverdüse), dann ist ein ganzer horizontaler Streifen auf dem Werkstück zu dünn oder gar nicht beschichtet. Dieser Fehler wird auch nicht durch nachfolgende Beschichtungspistolen wieder ausgeglichen, wie dies bei der horizontalen Anordnung der Beschichtungspistolen der Fall ist.

Zur Behebung dieses Problems ist eine Pulverbeschichtungsanlage mit in Reihe angeordneten Beschichtungsgeräten vorgeschlagen worden (WO 07/02895), bei dem jedem Beschichtungsgerät ein Pulverpfad mit einer Pulverzuführleitung zugeordnet ist und eine Überwachungseinrichtung ein Signal liefert, wenn der Pulverstrom durch wenigstens ein Beschichtungsgerät unter einem vorgegebenen Sollwert ist. Das Signal wird durch Korrektur einer Durchflußmessung in jedem Pulverpfad durchlaufende Gewichtsmessung eines Pulvervorrats sowie Errechnen eines Ansteuersignals für Förderpumpen des Gas-/Pulverstroms erhalten. Bei Unterschreiten des Sollwertes ist sichergestellt, daß die Störung oder der Ausfall eines Beschichtungsgerätes nicht zu einer Verschlechterung der gesamten Beschichtung des Werkstücks führt. Diese Aufgabe wird durch Pulverbeschichtungsanlagen gemäß Patentansprüchen 1, 2 oder 3 gelöst.

Die Erfindung schlägt eine Überwachungsvorrichtung vor, welche in die Pulverzufuhrleitung eines Beschichtungsgeräts oder in das Beschichtungsgerät selbst eingebaut werden kann und ein Signal liefert, sobald die durchlaufende Pulvermenge unter einen vorgebbaren Sollwert fällt bzw. ganz ausfällt. Bei den erfindungsgemäßen Pulverbeschichtungsanlagen wird der ordnungsgemäße Pulverfluß jedes Beschichtungsgerätes überwacht, und es kann ein Alarm ausgelöst werden, sobald zu wenig oder gar kein Pulver von dem Beschichtungsgerät abgegeben wird.

Das Meßsignal, welches Auskunft über die Pulvermenge bzw. das Vorhandensein eines Pulverstroms liefert, kann dabei mit verschiedenen Methoden erzeugt werden.

Die Überwachungseinrichtung kann eine Tribospannung erfassen, welche von dem Pulverstrom in dem Pulverpfad eines Pulverbeschichtungsgerätes erzeugt wird. Hierzu wird z.B. die Treibdüse des Pulverförderinjektors oder eine Pulverzuführung zu dem Beschichtungsgerät aus einem Material hergestellt, welche eine Tribospannung, oder Reibungsspannung, erzeugt, sobald Pulverteilchen gefördert werden. Die Tribospannung ist abhängig von der Menge des geförderten Pulvers; sie überträgt sich auf die Wand des Pulverförderweges und würde normalerweise über eine Leitung zu Masse abgeführt. Durch Vorsehen eines Metallgehäuses für den Injektor, eines Metallabschnitts im Pulverkanal des Beschichtungsgeräts oder eines Metallabschnitts in der Pulverzuführung zu dem Beschichtungsgerät kann die Tribospannung gezielt ausgewertet werden. Wenn nun z.B. der Injektor in einer Konststoffhalterung isoliert montiert wird und in die Leitung zur Masse ein Strommeßgerät eingefügt wird, läßt sich der aufgrund der erzeugten Tribospannung gegen Masse abfließende Tribostrom messen. Durch Messung des Tribostroms kann ein Signal gewonnen werden, welches Auskunft darüber gibt, ob Pulver fließt oder nicht, und gegebenenfalls wie groß der Pulveranteil in dem Pulver-Luft-Strom ist. Es kann ein Schwellwert definiert werden, so daß ein Alarm oder dergleichen ausgelöst wird, wenn der Tribostrom unter einen vorgewählten Wert fällt.

Anstelle der Messung der Tribospannung bzw. des Tribostroms kann die Geschwindigkeit des Pulverstroms in dem Pulverpfad, die Masse des in dem Pulverstrom enthaltenen Pulvers in einem Abschnitt des Pulverpfads oder der Pulver-Masse-Strom in dem Pulverpfad gemessen werden. Hierzu können Vorrichtungen und Verfahren verwendet werden, wie sie in der DE-A-44 06 046 und der DE-A-196 50 112 offenbart sind. Auf diese Patentanmeldungen wird hier ausdrücklich Bezug genommen, und die dort beschriebenen Vorrichtungen und Verfahren zum Messen der Geschwindigkeit des Pulverstroms, der Dichte des Pulverstroms und des Pulver-Masse-Stroms werden durch Bezugnahme in diese Anmeldung aufgenommen.

Die Erfindung ist im folgenden anhand eines bevorzugten Ausführungsbeispiels mit Bezug auf die Zeichnung näher erläutert. In den Figuren zeigen:
- Fig. 1: eine Pulverbeschichtungsanlage des Standes der Technik;
- Fig. 2: eine Pulverbeschichtungsanlage gemäß der Erfindung; und
- Fig. 3: eine Schaltung zum Erfassen der Tribospannung eines Pulverbeschichtungsgerätes.

Fig. 1 zeigt eine herkömmliche Beschichtungskabine 10 eines Pulverbeschichtungssystems, durch welche ein zu beschichtendes Werkstück in Pfeilrichtung 12 hindurch transportiert wird. In der Regel wird das Werkstück (nicht gezeigt) an einer Transportschiene hängend durch die Beschichtungskabine 10 bewegt. In einer Seitenwand der Beschichtungskabine sind vertikale Schlitze 14 vorgesehen, durch die mehrere in einer horizontalen Reihe angeordnete Beschichtungspistolen 16 Pulver in die Beschichtungskabine 10 einbringen und an das Werkstück abgeben. Die Beschichtungspistolen 16 sind auf einem in vertikaler Richtung verfahrbaren Schlitten 18 montiert, und während das Werkstück in der Pfeilrichtung 12 durch die Beschichtungskabine 10 bewegt wird, fahren die Beschichtungspistolen 16 auf dem Schlitten 18 auf und ab, um das Werkstück gleichmäßig zu beschichten. Ebenfalls in Fig. 1 gezeigt ist ein Pulvervorratsbehälter 20 mit den zugehörigen Luft- und Pulverleitungen sowie ein Steuergerät 22.

Bei dieser Pulverbeschichtungsanlage des Standes der Technik sind die mehreren Beschichtungspistolen 16 in Durchlaufrichtung 12 des Werkstücks horizontal hintereinander angeordnet und werden auf- und abbewegt, um eine gleichmäßige Pulverschicht auf das Werkstück aufzutragen. Bei den früheren Beschichtungspistolen war der Wirkungsgrad nicht hoch genug, um mit einer einzelnen Beschichtungspistole eine ausreichende Schichtdicke zu erhalten. Ferner war die pro Zeiteinheit von einer einzelnen Beschichtungspistole 16 ausgestoßene Pulvermenge nicht konstant genug, um eine gleichmäßige Schichtdicke zu gewährleisten. Erst durch das Zusammenwirken mehrerer hintereinander angeordneter Beschichtungspistolen war eine solche ausreichende und gleichmäßige Schichtdicke erzielbar. Die Anordnung mehrerer Beschichtungspistolen 16 in Durchlaufrichtung des Werkstücks hintereinander führte jedoch zwangsläufig zu relativ langen Beschichtungskabinen.

Fig. 2 zeigt eine elektrostatische Pulverbeschichtungsanlage gemäß der Erfindung, bei der die Beschichtungspistolen bzw. Sprühpistolen 24 vertikal übereinander angeordnet sind. Dieselben Komponenten wie in Fig. 1 sind mit denselben Bezugszeichen bezeichnet und nicht nochmals beschrieben.

Die Beschichtungspistolen 24 sind auf einem in vertikaler Richtung verfahrbaren Gestell 26 montiert; bei einer vereinfachten Ausführungsform können sie jedoch auch feststehend sein.

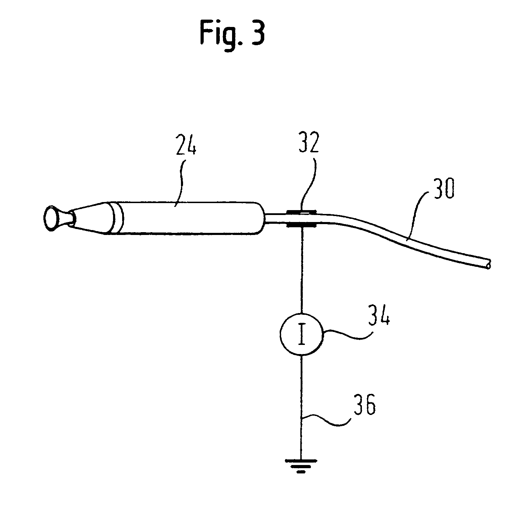

Bei der Pulverbeschichtungsanlage der Fig. 2 mit den vertikal übereinander angeordneten Beschichtungspistolen 24 läuft das Werkstück ebenfalls in Pfeilrichtung 12 durch die Beschichtungskabine 10, wobei nun jedoch ein horizontaler "Streifen" (oder bei sich auf- und abbewegenden Beschichtungspistolen 24 eine entsprechende sinusförmige Wellenlinie) des Werkstücks jeweils nur von nur einer Beschichtungspistole 24 beschichtet wird. Bei diesem neuen Beschichtungsanlagentyp kann die Pulverbeschichtungskabine 10 in Durchlaufrichtung 12 des Werkstückes wesentlich kürzer gebaut werden, das ganze System ist jedoch nicht mehr so ausfallsicher wie bei der Verwendung mehrerer hintereinander angeordneter Sprühpistolen, und auch die "Mittelung" der Pulverabgabe durch mehrere Beschichtungspistolen auf denselben "Werkstückstreifen" ist nicht mehr gegeben. Darum ist es bei der erfindungsgemäßen Pulverbeschichtungsanlage besonders wichtig, den ordnungsgemäßen Betrieb der Beschichtungspistolen 24 sicherzustellen. Die Erfindung sieht hierfür eine Überwachungseinrichtung zum Erfassen des Pulverstroms durch die jeweiligen Beschichtungspistolen 24 vor. Eine Ausführungsform der Überwachungseinrichtung ist in Fig. 3 gezeigt.

Fig. 3 zeigt eine Beschichtungspistole 24 mit einer Pulverzufuhrleitung 30. Ein Teil 32 der Pulverzufuhrleitung 30 ist aus einem Material gebildet, welches eine elektrische Tribospannung, oder Reibungsspannung erzeugt, sobald Pulverteilchen durch die Leitung 30 gefördert werden. Diese Tribospannung überträgt sich nun auf die Metallhülse 32 und würde normalerweise über eine Masseleitung abgeführt. Gemäß der Erfindung ist nun die Zufuhrleitung 30 nicht direkt mit Masse verbunden, sondern über ein Strommeßgerät 34 an eine Masseleitung 36 angeschlossen. Bei einer alternativen Ausführungsform kann auch der Pulverförderinjektor (nicht gezeigt) in der Pulverbeschichtungspistole 24 aus einem Material hergestellt werden, welches die elektrische Tribospannung erzeugt. In diesem Fall wird der Injektor z.B. in einer Kunststoffhalterung isoliert montiert und über das Strommeßgerät 34 mit der Masseleitung 36 verbunden.

Die Tribospannung ist abhängig von der Menge des geförderten Pulvers; durch die Messung des Tribostroms kann daher ein Signal gewonnen werden, welches Auskunft darüber gibt ob Pulver fließt oder nicht, sowie gegebenenfalls auch über die Menge des transportierten Pulvers. Es kann ein Schwellwert definiert werden, so daß ein Alarm ausgelöst wird, wenn der Tribostrom unter diesen Schwellwert fällt. Dieser Alarm zeigt an, daß entweder eine Beschichtungspistole 24 ganz ausgefallen ist, oder daß zumindest die von einer Beschichtungspistole ausgebrachte Pulvermenge für eine ordnungsgemäße Beschichtung nicht ausreichend ist. In diesem Fall kann gegebenenfalls der Beschichtungsvorgang auch automatisch unterbrochen werden. Bei einer alternativen Ausführungsform (nicht gezeigt) kann vorgesehen sein, daß eine zusätzliche, in vertikaler Richtung an dem Gestell 26 beweglich angebrachte Beschichtungspistole auf die Höhe der ausgefallenen oder gestörten Beschichtungspistole fährt und deren Aufgabe übernimmt.

Alternative Mittel zum Überwachen des Pulverstroms durch die jeweiligen Beschichtungspistolen 24 sind in der DE-A-44 06 046 und der DE-A-196 50 112 offenbart. Dort sind Vorrichtungen und Verfahren
- zum Messen der Pulvermasse pro Volumeneinheit ;
- zum Messen der Geschwindigkeit des Pulver-Luft-Stroms ; sowie
- zum Messen des Pulver-Masse-Stroms während der Förderung des Pulver-Luft-Gemisches
   beschrieben, welche für die Erfassung des Pulverstroms durch die Pulverzuführleitung bzw. die Beschichtungspistole verwendet werden können. Auf die Offenbarung in diesen beiden Patentanmeldungen wird ausdrücklich Bezug genommen. Insbesondere kann in Übereinstimmung mit der Lehre dieser Druckschriften die Überwachungseinrichtung Geschwindigkeitsmeßvorrichtungen zum Messen der Geschwindigkeiten der Pulverströme durch die Beschichtungspistolen aufweisen. Die Geschwindigkeitsmeßvorrichtung hat zwei mit Abstand zueinander an dem Pulverpfad vorgesehene Meßelektroden, die von dem geförderten Pulverstrom erzeugte Ladungsschwankungen in dem Pulverpfad erfassen und aus den erfaßten Ladungsschwankungen die Geschwindigkeit des Pulverstroms ermitteln. Die Überwachungseinrichtung kann auch Massenmeßvorrichtungen zum Messen der Pulvermasse pro Volumeneinheit in jeweils einem Abschnitt der Pulverpfade aufweisen, wobei die Massenmeßvorrichtung einen Mikrowellenresonator sowie Mittel zum Erfassen einer Änderung der Resonanzfrequenz und/oder der Mikrowellenamplitude des Mikrowellenresonators aufweist und aus der erfaßten Resonanzfrequenz und/oder der Mikrowellenamplitude die Pulvermasse in dem Pulverpfadabschnitt ableitet. Eine besonders genaue Erfassung des Pulverstroms erhält man bei Verwendung einer Massenmeßvorrichtung in Kombination mit einer Geschwindigkeitssmeßvorrichtung, wenn zusätzlich eine Rechenvorrichtung zum Berechnen eines Pulver-Massestromes aus der gemessenen Geschwindigkeit, der gemessenen Pulvermasse pro Volumeneinheit und den Abmessungen des Pulverpfades vorgesehen wird.

## Patentansprüche

1. Pulverbeschichtungsanlage mit mehreren Beschichtungsgeräten (24), welche im wesentlichen vertikal übereinander angeordnet sind, zur gleichzeitigen Pulverabgabe auf ein Werkstück, das an den Beschichtungsgeräten mit einer Horizontalkomponente vorbeibewegt wird, **dadurch gekennzeichnet, daß**
a) eine Überwachungseinrichtung (32,34) zum Erfassen eines Pulverstroms durch die jeweiligen Beschichtungsgeräte vorgesehen ist;
b) jedem Beschichtungsgerät (24) ein Pulverpfad bestehend aus einer Pulverzuführleitung (30) zu dem Beschichtungsgerät sowie einer Pulverfördereinrichtung zugeordnet ist und die Überwachungseinrichtung mehrere Detektorvorrichtungen (34) umfaßt, die jeweils mit einem Pulverpfad eines Beschichtungsgeräts gekoppelt sind;
c) die Überwachungseinrichtung (34) ein Signal liefert, wenn der Pulverstrom durch wenigstens ein Beschichtungsgerät (24) unter einem vorgegebenen Sollwert ist;
d) die Überwachungseinrichtung (32,34) Tribospannungen erfaßt, welche von den Pulverströmen durch die Beschichtungsgeräte (24) und/oder deren Zuleitungen (30) und/oder deren Pulverfördereinrichtungen erzeugt werden.

2. Pulverbeschichtungsanlage mit mehreren Beschichtungsgeräten (24), welche im wesentlichen vertikal übereinander angeordnet sind, zur gleichzeitigen Pulverabgabe auf ein Werkstück, das an den Beschichtungsgeräten mit einer Horizontalkomponente vorbeibewegt wird, **dadurch gekennzeichnet, daß**
a) eine Überwachungseinrichtung (32,34) zum Erfassen eine Pulverstroms durch die jeweiligen Beschichtungsgeräte vorgesehen ist;
b) jedem Beschichtungsgerät (24) ein Pulverpfad bestehend aus einer Pulverzuführleitung (30) zu dem Beschichtungsgerät sowie einer Pulverfördereinrichtung zugeordnet ist und die Überwachungseinrichtung mehrere Detektorvorrichtungen (34) umfaßt, die jeweils mit einem Pulverpfad eines Beschichtungsgeräts gekoppelt sind;
c) die Überwachungseinrichtung (34) ein Signal liefert, wenn der Pulverstrom durch wenigstens ein Beschichtungsgerät (24) unter einem vorgegebenen Sollwert ist;
d) die Überwachungseinrichtung eine Geschwindigkeitsmeßvorrichtung zum Messen der Geschwindigkeiten der Pulverströme durch die Beschichtungsgeräte (24) aufweist, welche zwei mit Abstand zueinander an jedem Pulverpfad vorgesehene Meßelektroden aufweist, die von dem geförderten Pulverstrom erzeugte Ladungsschwankungen in dem Pulverpfad erfassen und aus den erfaßten Ladungsschwankungen die Geschwindigkeit des Pulverstroms ermitteln.

3. Pulverbeschichtungsanlage mit mehreren Beschichtungsgeräten (24), welche im wesentlichen vertikal übereinander angeordnet sind, zur gleichzeitigen Pulverabgabe auf ein Werkstück, das an den Beschichtungsgeräten mit einer Horizontalkomponente vorbeibewegt wird, **dadurch gekennzeichnet, daß**
a) eine Überwachungseinrichtung (32,34) zum Erfassen eine Pulverstroms durch die jeweiligen Beschichtungsgeräte vorgesehen ist;
b) jedem Beschichtungsgerät (24) ein Pulverpfad bestehend aus einer Pulverzuführleitung (30) zu dem Beschichtungsgerät sowie einer Pulverfördereinrichtung zugeordnet ist und die Überwachungseinrichtung mehrere Detektorvorrichtungen (34) umfaßt, die jeweils mit einem Pulverpfad eines Beschichtungsgeräts gekoppelt sind;
c) die Überwachungseinrichtung (34) ein Signal liefert, wenn der Pulverstrom durch wenigstens ein Beschichtungsgerät (24) unter einem vorgegebenen Sollwert ist;
d) die Überwachungseinrichtung Massenmeßvorrichtungen zum Messen der Pulvermasse pro Volumeneinheit in jeweils einem Abschnitt der Pulverpfade aufweist.

4. Pulverbeschichtungsanlage nach Anspruch 3, **dadurch gekennzeichnet, daß** die Massenmeßvorrichtung einen Mikrowellenresonator sowie Mittel zum Erfassen einer Änderung der Resonanzfrequenz und/oder der Mikrowellenamplitude des Mikrowellenresonators aufweist und aus der erfaßten Resonanzfrequenz und/oder der Mikrowellenamplitude die Pulvermasse in dem Pulverpfadabschnitt ableitet.

5. Pulverbeschichtungsanlage nach einem der Ansprüche 1 bis 4, **dadurch gekennzeichnet, daß** der Pulverpfad jedes Beschichtungsgerätes (24) oder der Pulverfördervorrichtung isoliert und über ein Strommeßgerät (34) mit Masse verbunden ist.

6. Pulverbeschichtungsanlage nach Anspruch 3, 4 oder 5, **dadurch gekennzeichnet, daß** die Überwachungseinrichtung eine Rechenvorrichtung zum Berechnen eines Pulver-Massestroms aus der gemessenen Geschwindigkeit, der gemessenen Pulvermasse pro Volumeneinheit und den Abmessungen des Pulverpfades aufweist.

7. Pulverbeschichtungsanlage nach einem der Ansprüche 1 bis 6, **dadurch gekennzeichnet, daß** die mehreren vertikal übereinander angeordneten Beschichtungsgeräte (24) feststehen und das Werkstück in horizontaler Richtung an diesen vorbeigeführt wird.

8. Pulverbeschichtungsanlage nach einem der Ansprüche 1 bis 6, **dadurch gekenn-zeichnet, daß** die mehreren vertikal übereinander angeordneten Beschichtungsgeräte (24) in vertikaler Richtung gemeinsam bewegbar sind und das Werkstück in horizontaler Richtung an diesen vorbeigeführt wird.

9. Pulverbeschichtungsanlage nach einem der vorangehenden Ansprüche, **gekennzeichnet durch** ein zusätzliches Beschichtungsgerät, das in vertikaler Richtung beweglich ist und bei Erfassung eines ungenügenden Pulverstroms eines Beschichtungsgerätes an dessen Stelle treten kann.

10. Pulverbechichtungsanlage nach einem der vorangehenden Ansprüche, **gekennzeichnet durch** eine Vorrichtung zum Stoppen des Betriebes der Pulverbeschichtungsanlage, wenn ein ungenügender Pulverstrom eines Beschichtungsgerätes erfaßt wird.

## Claims

1. Powder coating installation, comprising a plurality of coating units (24) arranged substantially vertically one on top of the other for simultaneous powder discharge on to a workpiece which is moved with a horizontal component past the coating units, **characterized in that**
a) a monitoring means (32, 34) for detecting a powder stream which flows through the respective coating units (24) is provided;
b) a powder path consisting of a powder supply line (30) to the coating unit (24) and a powder conveying means is associated with each coating unit (24), and the monitoring means includes a plurality of detector devices (34), each coupled to a respective powder path of a coating unit;
c) the monitoring means (34) emits a signal when the powder stream through at least one coating unit (24) is below a given desired value;
d) the monitoring means (32, 34) detects tribo voltages generated by the powder streams flowing through the coating units (24) and/or their supply lines (30) and/or their powder conveying means.

2. Powder coating installation, comprising a plurality of coating units (24) arranged substantially vertically one on top of the other for simultaneous powder discharge on to a workpiece which is moved with a horizontal component past the coating units, **characterized in that**
a) a monitoring means (32, 34) for detecting a powder stream which flows through the respective coating units (24) is provided;
b) a powder path consisting of a powder supply line (30) to the coating unit (24) and a powder conveying means is associated with each coating unit (24), and the monitoring means includes a plurality of detector devices (34), each coupled to a respective powder path of a coating unit;
c) the monitoring means (34) emits a signal when the powder stream through at least one coating unit (24) is below a given desired value;
d) the monitoring means comprises speed measuring instruments to measure the velocity of flow of the powder streams passing through the coating units (24) which comprises two measuring electrodes disposed spaced from each other along the powder path to detect load variations in the powder path caused by the powder stream being conveyed and to determine the velocity of the powder stream based on the load variations detected.

3. Powder coating installation comprising a plurality of coating units (24) arranged substantially vertically one on top of the other for simultaneous powder discharge on to a workpiece which is moved with a horizontal component past the coating units, **characterized in that**
a) a monitoring means (32, 34) for detecting a powder stream which flows through the respective coating units (24) is provided;
b) a powder path consisting of a powder supply line (30) to the coating unit (24) and a powder conveying means is associated with each coating unit (24), and the monitoring means includes a plurality of detector devices (34), each coupled to a respective powder path of a coating unit;
c) the monitoring means (34) emits a signal when the powder stream through at least one coating unit (24) is below a given desired value;
d) the monitoring means comprises measuring instruments to measure the powder mass per unit volume in a respective section each of the powder path.

4. The powder coating installation as claimed in claim 3, **characterized in that** the mass measuring instrument comprises a microwave resonator as well as means to detect a change in the resonant frequency and/or microwave amplitude of the microwave resonator and to derive the powder mass in the powder path section from the resonant frequency and/or microwave amplitude detected.

5. The powder coating installation as claimed in any one of claims 1 to 4, **characterized in that** the powder path of each coating unit (24) or of the powder conveying means is insulated and connected to ground via a current measuring instrument (34).

6. The powder coating installation as claimed in any one of claims 3, 4 or 5, **characterized in that** the monitoring means comprises a computer to calculate a powder-mass stream based on the velocity measured, the powder mass per unit volume measured, and the dimensions of the powder path.

7. The powder coating installation as claimed in any one of claims 1 to 6, **characterized in that** the plurality of coating units (24) arranged substantially vertically one on top of the other are stationary and the workpiece is guided past them in horizontal direction.

8. The powder coating installation as claimed in any one of claims 1 to 6, **characterized in that** the plurality of coating units (24) arranged substantially vertically one on top of the other are movable jointly in vertical direction and the workpiece is guided past them in horizontal direction.

9. The powder coating installation as claimed in any one of the preceding claims, **characterized by** an additional coating unit which is movable in vertical direction and may replace another coating unit for which an insufficient powder stream is detected.

10. The powder coating installation as claimed in any one of claims 1 to 9, **characterized by** a device to stop operations of the powder coating installation upon detection of an insufficient powder stream in a coating unit.

## Revendications

1. Installation de revêtement par poudre avec plusieurs dispositifs de revêtement (24) qui sont alignés sensiblement dans le sens vertical les uns au-dessus des autres pour permettre un dépôt simultané de poudre sur une pièce qui est déplacée avec une composante horizontale devant les dispositifs de revêtement, **caractérisée**
**en ce qu'**il est prévu un dispositif de surveillance (32, 34) pour la détection d'un flux de poudre traversant les dispositifs de revêtement respectifs ;
**en ce qu'**à chaque dispositif de revêtement (24) est attribué un trajet de poudre se composant d'une conduite d'alimentation en poudre (30) vers
le dispositif de revêtement ainsi que d'un dispositif de transport de poudre et en ce que le dispositif de surveillance comprend plusieurs éléments de détection (34) qui sont couplés respectivement avec un trajet de poudre d'un dispositif de revêtement ;
**en ce que** le dispositif de surveillance (34) fournit un signal lorsque le flux de poudre à travers au moins un dispositif de revêtement (24) est inférieur à une valeur de consigne prédéterminée et
**en ce que** le dispositif de surveillance (32, 34) capte des tensions triboélectriques qui sont générées par les flux de poudre traversant les dispositifs de revêtement (24) et/ou leurs conduites d'arrivée (30) et/ou leurs dispositifs de transport de poudre.

2. Installation de revêtement par poudre avec plusieurs dispositifs de revêtement (24) qui sont alignés sensiblement dans le sens vertical les uns au-dessus des autres pour permettre un dépôt simultané de poudre sur une pièce qui est déplacée avec une composante horizontale devant les dispositifs de revêtement, **caractérisée**
**en ce qu'**il est prévu un dispositif de surveillance (32, 34) pour la détection d'un flux de poudre traversant les dispositifs de revêtement respectifs ;
**en ce qu'**à chaque dispositif de revêtement (24) est attribué un trajet de poudre se composant d'une conduite d'alimentation en poudre (30) vers le dispositif de revêtement ainsi que d'un dispositif de transport de poudre et en ce que le dispositif de surveillance comprend plusieurs éléments de détection (34) qui sont couplés respectivement avec un trajet de poudre d'un dispositif de revêtement ;
**en ce que** le dispositif de surveillance (34) fournit un signal lorsque le flux de poudre à travers au moins un dispositif de revêtement (24) est inférieur à une valeur de consigne prédéterminée et
**en ce que** le dispositif de surveillance comprend un équipement de mesure de la vitesse pour mesurer les vitesses des flux de poudre traversant les dispositifs de revêtement (24), lequel comprend deux électrodes de mesure prévues avec un espacement entre elles sur chaque trajet de poudre, lesquelles électrodes détectent des fluctuations de charge dans le trajet de poudre générées par le flux de poudre transporté et déterminent la vitesse du flux de poudre à partir des fluctuations de charge détectées.

3. Installation de revêtement par poudre avec plusieurs dispositifs de revêtement (24) qui sont alignés sensiblement dans le sens vertical les uns au-dessus des autres pour permettre un dépôt simultané de poudre sur une pièce qui est déplacée avec une composante horizontale devant les dispositifs de revêtement, **caractérisée**
**en ce qu'**il est prévu un dispositif de surveillance (32, 34) pour la détection d'un flux de poudre traversant les dispositifs de revêtement respectifs ;
**en ce qu'**à chaque dispositif de revêtement (24) est attribué un trajet de poudre se composant d'une conduite d'alimentation en poudre (30) vers
le dispositif de revêtement ainsi que d'un dispositif de transport de poudre et en ce que le dispositif de surveillance comprend plusieurs éléments de détection (34) qui sont couplés respectivement avec un trajet de poudre d'un dispositif de revêtement ;
**en ce que** le dispositif de surveillance (34) fournit un signal lorsque le flux de poudre à travers au moins un dispositif de revêtement (24) est inférieur à une valeur de consigne prédéterminée et
**en ce que** le dispositif de surveillance comprend des équipements de mesure de la masse pour la mesure de la masse de poudre par unité de volume dans respectivement une section des trajets de poudre.

4. Installation de revêtement par poudre selon la revendication 3, **caractérisée en ce que** le dispositif de mesure de la masse comprend un résonateur à micro-ondes ainsi que des moyens pour détecter une modification de la fréquence de résonance et/ou de l'amplitude des micro-ondes du résonateur à micro-ondes et déduit la masse de poudre dans la section de trajet de poudre à partir de la fréquence de résonance et/ou de l'amplitude des micro-ondes.

5. Installation de revêtement par poudre selon l'une quelconque des revendications 1 à 4, **caractérisée en ce que** le trajet de poudre de chaque dispositif de revêtement (24) ou du dispositif de transport de poudre est isolé et est relié à la masse par l'intermédiaire d'un appareil de mesure du courant (34).

6. Installation de revêtement par poudre selon la revendication 3, 4 ou 5, **caractérisée en ce que** le dispositif de surveillance comprend une unité de calcul pour le calcul d'un flux de masse de poudre à partir de la vitesse mesurée, de la masse de poudre par unité de volume mesurée et des dimensions du trajet de poudre.

7. Installation de revêtement par poudre selon l'une quelconque des revendications 1 à 6, **caractérisée en ce que** les dispositifs de revêtement (24), qui sont au nombre de plusieurs et qui sont disposés dans le sens vertical l'un au-dessus de l'autre, sont installés à poste fixe et **en ce que** la pièce est déplacée dans le sens horizontal devant ceux-ci.

8. Installation de revêtement par poudre selon l'une quelconque des revendications 1 à 6, **caractérisée en ce que** les dispositifs de revêtement (24), qui sont au nombre de plusieurs et qui sont disposés dans le sens vertical l'un au-dessus de l'autre, peuvent être déplacés en commun dans le sens vertical et **en ce que** la pièce est déplacée dans le sens horizontal devant ceux-ci.

9. Installation de revêtement par poudre selon l'une quelconque des revendications précédentes, **caractérisée par** un dispositif de revêtement supplémentaire qui est mobile dans le sens vertical et qui, en cas de détection d'un flux de poudre insuffisant d'un dispositif de revêtement, peut prendre le relais de celui-ci.

10. Installation de revêtement par poudre selon l'une quelconque des revendications précédentes, **caractérisée par** un dispositif pour arrêter le fonctionnement de l'installation de revêtement par poudre lorsqu'un flux de poudre insuffisant est détecté sur un dispositif de revêtement.
